# EUROPÄISCHE PATENTSCHRIFT

(11) **EP 2 845 283 B1**
(45) Veröffentlichungstag und Bekanntmachung des Hinweises auf die Patenterteilung: **28.02.2018**
(21) Anmeldenummer: 13720924.3
(22) Anmeldetag: 02.05.2013
(51) Int. Cl.: H02H 3/18, H02J 9/06, H02H 3/06, H02H 3/087, H02H 3/093

(54) **ENERGIEVERSORGUNGSMODUL ALS ZWEITOR, VERWENDUNG EINER TRENNEINRICHTUNG IN EINEM SOLCHEN ENERGIEVERSORGUNGSMODUL UND VERFAHREN ZUM BETRIEB EINES SOLCHEN ENERGIEVERSORGUNGSMODULS**
ENERGY SUPPLY MODULE AS A TWO-PORT NETWORK, USE OF A SEPARATING DEVICE IN SUCH AN ENERGY SUPPLY MODULE AND METHOD FOR OPERATING SUCH AN ENERGY SUPPLY MODULE
MODULE D'ALIMENTATION EN ÉNERGIE CONÇU EN DIPÔLE, UTILISATION D'UN DISPOSITIF DE SÉPARATION DANS UN TEL MODULE D'ALIMENTATION EN ÉNERGIE ET PROCÉDÉ DE FONCTIONNEMENT D'UN TEL MODULE D'ALIMENTATION EN ÉNERGIE

(30) Priorität: 03.05.2012 DE 102012103904
(43) Veröffentlichungstag der Anmeldung: 11.03.2015
(73) Patentinhaber: Phoenix Contact GmbH & Co. KG, 32825 Blomberg (DE)
(72) Erfinder: ZEUCH, Jochen, 32825 Blomberg (DE); HEINEMANN, Michael, 32791 Lage (DE); HENKEL, Hartmut, 32825 Blomberg (DE)
(74) Vertreter: Michalski Hüttermann & Partner Patentanwälte mbB
(86) Internationale Anmeldenummer: PCT/EP2013/059182
(87) Internationale Veröffentlichungsnummer: WO 2013/164421

(56) Entgegenhaltungen:
- JP-A- 2007 209 195
- US-A1- 2002 135 235
- US-A1- 2010 231 048
- US-A1- 2011 227 640

## Beschreibung

Die vorliegende Erfindung betrifft ein Energieversorgungsmodul mit einem Eingangstor zum Anschluss an eine Stromquelle und einem Ausgangstor als unterbrechungsfreie Stromversorgung, wobei das Eingangstor und das Ausgangstor über eine elektrische Trenneinrichtung trennbar durchverbunden sind, und eine Hilfsenergiequelle parallel zu dem Eingangstor und dem Ausgangstor verbunden oder verbindbar ist, wobei die Trenneinrichtung zwischen der Hilfsenergiequelle und dem Eingangstor positioniert ist. Die vorliegende Erfindung betrifft weiterhin eine Verwendung einer Trenneinrichtung in einem solchen Energieversorgungsmodul sowie ein Verfahren zum Betrieb eines solchen Energieversorgungsmoduls.

Derartige Energieversorgungsmodule werden an ihrem Eingangstor an eine Versorgungsleitung, die von der Stromquelle gespeist wird, angeschlossen, so dass hinter dem Ausgangstor des Energieversorgungsmoduls angeordnete Verbraucher im Falle eines Fehlers der Stromquelle von dem Energieversorgungsmodul mit Energie versorgt werden. zwischen der Stromquelle und dem Eingangstor des Energieversorgungsmoduls an die Versorgungsleitung angeschlossene Verbraucher werden aufgrund ihrer Position nur von der Stromquelle versorgt. Dadurch ist eine Unterscheidung der Verbraucher in solche, deren Betrieb im Falle eines Fehlers der Stromquelle nicht aufrechterhalten werden muss, und solche, die weiter betrieben werden sollen, auf einfache Weise möglich, ohne dass zwei Stromquellen mit entsprechenden Versorgungsleitungen bereitgestellt werden müssen. Entsprechend kann das Energieversorgungsmodul einfach und mit einer klein dimensionierten Hilfsenergiequelle ausgeführt werden, da nur ein Teil der an die Stromquelle angeschlossenen Verbraucher versorgt werden muss.

Für die Funktion des Energieversorgungsmoduls als unterbrechungsfreie Stromversorgung ist die Trenneinrichtung erforderlich, die das Energieversorgungsmodul im Falle eines Fehlers der Stromquelle eingangsseitig von der Stromquelle trennt. Dadurch können die am Ausgangstor angeschlossenen Verbraucher von der Hilfsenergiequelle versorgt werden, ohne dass Strom aus dem Energieversorgungsmodul an andere Verbraucher geliefert wird.

Die Trenneinrichtung wird im Stand der Technik beispielsweise als Diode realisiert. Die Diode verhindert bei einem Fehler der Stromquelle automatisch, dass Strom von der Hilfsenergiequelle in Richtung der Stromquelle und damit zu Verbrauchern fließt, die nicht weiter versorgt werden sollen. An der Diode erfolgt jedoch ein Spannungsabfall von etwa 0,7 V, was zu entsprechenden Verlusten an der Diode führt. Die Diode führt eine automatische Trennung von Eingangstor und Ausgangstor durch.

Zur Reduzierung der Verluste ist weiter bekannt, die Trenneinrichtung mit einem Transistor auszuführen, der von einer Steuerungseinrichtung angesteuert wird. Sobald ein Fehler der Stromquelle von der Steuerungseinrichtung erkannt wird, wird der Transistor sperrend geschaltet, so dass ein Stromfluss zwischen der Stromquelle und dem Ausgangstor bzw. der Hilfsstromquelle des Energieversorgungsmoduls verhindert wird. Im Betrieb werden die Verluste an der Trenneinrichtung durch die Verwendung eines Feldeffekttransistors weiter reduziert, da die Verlustleistung nur von dem Drain-Source-Widerstand abhängt, der bei Feldeffekttransistoren vergleichsweise klein ist. Dieses Prinzip entspricht einer synchronen Gleichrichtung. Bei der Realisierung der Trenneinrichtung mit einem solchen Transistor ist ein schnelles Schalten des Transistors erforderlich, um bei Schwankungen der Eingangsspannung oder stark induktiven Stromquellen Ausgleichsströme in dem Energieversorgungsmodul zu unterdrücken. Auch das Auftreten von Oberwellen, beispielsweise durch Lastwechsel der angeschlossenen Verbraucher kann kurzzeitige Spannungsänderungen hervorrufen, die ein schnelles Schalten des Transistors erfordern. Deshalb erfordert das Verfahren zum Betrieb des Energieversorgungsmoduls ein häufiges, schnelles Schalten der Trenneinrichtung, wodurch die Ansteuerung aufwendig ist.

Nachteilig an den zuvor beschriebenen Energieversorgungsmodulen ist, dass keine Begrenzung des von der Stromquelle bereitgestellten Eingangsstroms erfolgt. Bei einem ausgangsseitigen Kurzschluss wird die gesamte Eingangsenergie über die Trenneinrichtung geführt, was erhebliche Verluste bedeuten kann. Insbesondere bei einem harten Kurzschluss kann die verbleibende Spannung an dem Eingangstor so gering werden, dass Verbraucher zwischen dem Eingangstor des Energieversorgungsmoduls und der Stromquelle nicht mehr mit Energie versorgt werden können und abschalten. Ebenso kann die Ansteuerspannung des Feldeffekttransistors zusammenbrechen und nicht mehr hoch genug sein, um diesen voll durchzuschalten.

Bei der Verwendung einer Trenneinrichtung mit einer Kombination des Feldeffekttransistors mit einer Diode, bzw. im Linearbetrieb entstehen ebenfalls große Verluste, was zu einem erhöhten Kühlbedarf führt.

Die Druckschrift US 2002/135235 A1, die als nächstliegender Stand der Technik gesehen wird, beschreibt ein Energieversorgungsmodul mit einem Eingangstor zum Anschluss an eine Stromquelle und einem Ausgangstor als unterbrechungsfreie Stromversorgung, wobei das Eingangstor und das Ausgangstor über eine elektrische Trenneinrichtung trennbar durchverbunden sind, wobei eine Hilfsenergiequelle parallel zu dem Eingangstor und dem Ausgangstor verbunden oder verbindbar ist, wobei die Trenneinrichtung zwischen der Hilfsenergiequelle (und dem Eingangstor positioniert ist, wobei die Hilfsenergiequelle einen wiederaufladbaren Energiespeicher umfasst und wobei die Trenneinrichtung eine Schaltungsanordnung mit zwei Transistoren und zwei Dioden umfasst, wobei die Transistoren umgekehrt in Reihe geschaltet sind, und zu jedem Transistor je eine der Dioden invers zu seiner Stromrichtung geschaltet ist. Die Druckschriften US 2011/227640 A1 und JP 2007 209195 A zeigen weitere Energieversorgungsmodule.

Ausgehend von dem Stand der Technik ist es Aufgabe der vorliegenden Erfindung, ein Energieversorgungsmodul der oben genannten Art anzugeben, bei dem geringe Verluste insbesondere an der Trenneinrichtung anfallen, das bei Einbrüchen der Eingangsspannung eine schnelle bzw. automatische Betätigung der Trenneinrichtung bewirkt, und das Rückwirkungen von Fehlern auf der Seite ihres Ausgangstores zu der Seite ihres Eingangstores verhindert. Außerdem ist ein Verfahren zum Betrieb des Energieversorgungsmoduls anzugeben, was eine einfache und effiziente Ansteuerung der Trenneinrichtung ermöglicht.

Die Lösung der Aufgabe erfolgt erfindungsgemäß durch die Merkmale der unabhängigen Ansprüche. Vorteilhafte Ausgestaltungen der Erfindung sind in den Unteransprüchen angegeben.

Erfindungsgemäß ist somit ein Energieversorgungsmodul mit einem Eingangstor zum Anschluss an eine Stromquelle und einem Ausgangstor als unterbrechungsfreie Stromversorgung angegeben, wobei das Eingangstor und das Ausgangstor über eine elektrische Trenneinrichtung trennbar durchverbunden sind, und eine Hilfsenergiequelle parallel zu dem Eingangstor und dem Ausgangstor verbunden oder verbindbar ist, wobei die Trenneinrichtung zwischen der Hilfsenergiequelle und dem Eingangstor positioniert ist, wobei die Trenneinrichtung eine Schaltungsanordnung mit zwei Transistoren und zwei Dioden umfasst, wobei die Transistoren umgekehrt in Reihe geschaltet sind, und zu jedem Transistor eine Diode invers zu seiner Stromrichtung geschaltet ist.

Grundidee der vorliegenden Erfindung ist es also, durch die Verwendung der Schaltungsanordnung mit den zwei Transistoren und Dioden eine Trenneinrichtung zu realisieren, die geringe Verluste aufweist und einen Strom am Eingangstor begrenzt. Dadurch wird einerseits eine Überlastung einer Stromquelle, an welche das Energieversorgungsmodul mit seinem Eingangstor angeschlossen ist, verhindert, und andererseits wird sichergestellt, dass zwischen der Stromquelle und dem Eingangstor angeschlossene Verbraucher bei Fehlerfällen am Ausgangstor des Energieversorgungsmoduls weiterhin mit Energie versorgt werden können, um ihren Betrieb aufrechtzuerhalten. Entsprechend kann das auch das Energieversorgungsmodul als Verbraucher eingangsseitig kontinuierlich mit Energie versorgt werden, um den Betrieb der Trenneinrichtung aufrechtzuerhalten, da auch eine Ansteuerspannung der Feldeffekttransistoren aufrechterhalten wird, um diese voll durchzuschalten. Auch kann die Trenneinrichtung schnell auf Spannungsschwankungen an dem Eingangs- und/oder dem Ausgangstor reagieren, so dass ein zuverlässiges Energieversorgungsmodul gebildet wird. Die Schaltungsanordnung kann durch die umgekehrt in Reihe geschalteten Transistoren in vier verschiedenen Betriebsmodi betrieben werden. In einem bidirektional sperrenden Modus sperren beide Transistoren, und auch über die beiden Dioden kann kein Strom fließen. Im einem bidirektional leitenden Modus sind beide Transistoren leitend geschaltet, so dass ein Stromfluss durch die Trenneinrichtung in beiden Richtungen verlustarm möglich ist. Der Strom fließt in diesem Fall über die Transistoren und nicht über die Dioden. In einem unidirektional leitenden Modus wird jeweils einer der Transistoren leitend geschaltet, und der andere gesperrt. Entsprechend ergibt sich ein Stromfluss jeweils in Stromrichtung der Diode, die invers zu dem gesperrten Transistor angeordnet ist, über diese Diode und den jeweils anderen Transistor. Die Schaltungsanordnung ermöglicht es somit, den Eingangsstrom zu unterbrechen. Wird über die Schaltungsanordnung ein vorgegebener Spitzenstrom überschritten, kann ein am Ausgangstor angeschlossener Verbraucher abgeschaltet werden. Ebenso ist ein Sanftanlauf bzw. Hot Plugging möglich. Die Positionierung der Trenneinrichtung in dem Energieversorgungsmodul kann an jedem der Kontakte des Eingangstores durchgeführt werden. Aufgrund der umgekehrten Reihenschaltung der Transistoren kann die Schaltungsanordnung beliebig angeordnet und in dem Energieversorgungsmodul positioniert sein. Die Hilfsenergiequelle kann beispielsweise eine Batterie umfassen.

Gemäß einer bevorzugten Ausführungsform der Erfindung ist vorgesehen, dass die Transistoren als Bipolartransistoren oder Feldeffekttransistoren ausgeführt sind. Die Wahl der Transistoren ist für die Schaltungsanordnung prinzipiell unerheblich, so dass eine Konfiguration mit Bipolartransistoren oder Feldeffekttransistoren, kurz als FET bezeichnet, durchgeführt werden kann. Die Bipolartransistoren können jeweils beide wahlweise NPN-oder PNP-Transistoren sein. Entsprechend können die Feldeffekttransistoren jeweils beide als N-Kanal oder P-Kanal FETs ausgeführt sein. Für die Trenneinrichtung ist es unerheblich, ob die Transistoren an ihren Drain- oder Source-Anschlüssen verbunden sind. Erfindungsgemäß ist weiterhin vorgesehen, dass die Hilfsenergiequelle einen wiederaufladbaren Energiespeicher umfasst, und das Energieversorgungsmodul ausgeführt ist, den Energiespeicher über das Eingangstor zu laden. Somit kann das Energieversorgungsmodul autark betrieben werden, ohne dass eine weitere Stromquelle angeschlossen oder ein Energiespeicher ausgetauscht werden muss. Für das Laden und/oder Entladen des Energiespeichers kann entsprechend eine Ladevorrichtung bzw. Entladevorrichtung vorgesehen sein, um einen Lade- bzw. Entladestrom zu begrenzen und/oder das Entladen des Energiespeichers bei Unterschreiten einer vorgegebenen Energiereserve zu beenden. Durch die Strombegrenzung der Trenneinrichtung werden beim Laden Rückwirkungen auf am Eingangstor des Energieversorgungsmoduls angeschlossene Verbraucher verhindert. Durch die Ladevorrichtung können auch Rückwirkungen auf an dem Ausgangstor angeschlossene Verbraucher verhindert werden.

In vorteilhafter Ausgestaltung der Erfindung ist vorgesehen, dass das Energieversorgungsmodul eine Schalteinrichtung und eine Steuerungseinrichtung zum Betätigen der Schalteinrichtung umfasst, wobei der Energiespeicher über die Schalteinrichtung parallel mit dem Eingangstor und dem Ausgangstor verbindbar ist. Die Schalteinrichtung verbindet bzw. trennt den Energiespeicher von dem Eingangs- bzw. Ausgangstor, wodurch der Energiespeicher bedarfsgerecht verbunden bzw. getrennt werden kann.

Gemäß einer bevorzugten Ausführungsform der Erfindung ist vorgesehen, dass die Schalteinrichtung eine Schaltungsanordnung mit zwei Transistoren und zwei Dioden umfasst, wobei die Transistoren umgekehrt in Reihe geschaltet sind, und zu jedem Transistor eine Diode invers zu seiner Stromrichtung geschaltet ist. Die Schalteinrichtung weist damit den gleichen Aufbau wie die zuvor beschriebene Trenneinrichtung auf, so dass auf weitergehende Ausführungen zu der Funktion der Schalteinrichtung verzichtet wird.

Erfindungsgemäß ist weiterhin vorgesehen, dass das Energieversorgungsmodul eine Ladeeinheit aufweist, die parallel zu der Schalteinrichtung angeordnet ist. Durch die Ladeeinheit ist ein bedarfsgerechtes Laden des Energiespeichers möglich, so dass das Laden beispielsweise abhängig von einer Stromreserve des Energieversorgungsmoduls unter Berücksichtigung der am Ausgangstor angeschlossenen Verbraucher durchgeführt werden kann. Dazu ist die Schalteinrichtung auf Unterbrechen zu schalten.

In weiterer Ausgestaltung der Erfindung ist vorgesehen, dass der wiederaufladbare Energiespeicher ein Kondensatormodul mit einer Mehrzahl Kondensatoren umfasst. Ein derartiges Kondensatormodul weist geringe Reaktionszeiten auf, so dass bei Fehlern der Stromquelle am Ausgangstor des Energieversorgungsmoduls angeschlossene Verbraucher schnell weiterversorgt werden können.

In vorteilhafter Ausgestaltung der Erfindung ist vorgesehen, dass die Kondensatoren als Elektrolytkondensatoren und/oder Doppelschichtkondensatoren ausgeführt sind.

Gemäß einer vorteilhaften Ausgestaltung der Erfindung ist vorgesehen, dass der wiederaufladbare Energiespeicher einen Akkumulator umfasst. Insbesondere ist vorgesehen, dass der Akkumulator als Blei- oder Lithiumakkumulator ausgeführt ist. Derartige Akkumulatoren sind mit einer hohen Speicherkapazität kostengünstig herzustellen. Die Handhabung derartiger Akkumulatoren ist dadurch begünstigt, dass sie ihre Ladung auch bei einer Trennung von einer Ladespannung über einen großen Zeitraum aufrechterhalten. Besonders bevorzugt ist die Verwendung von Lithium-Ionen-oder Lithium-Polymer-Akkumulatoren.

Die Hilfsenergiequelle kann integral mit dem Energieversorgungsmodul ausgeführt sein, um ein kompaktes Energieversorgungsmodul bereitzustellen, das mit geringem Aufwand installiert werden kann. Alternativ ist die Hilfsenergiequelle als separates Bauteil ausgeführt, und das Energieversorgungsmodul umfasst elektrische Kontakte für die Verbindung der Hilfsenergiequelle, wodurch ein einfacher Austausch der Hilfsenergiequelle und eine hohe Flexibilität gewährleistet werden.

Gemäß einer vorteilhaften Weiterbildung der Erfindung ist vorgesehen, dass das Energieversorgungsmodul zur Bereitstellung einer Ausgangsspannung an seinem Ausgangstor ausgeführt ist, die Hilfsenergiequelle zur Bereitstellung einer Hilfsspannung ausgeführt ist, die von der Ausgangsspannung unterschiedlich ist, und das Energieversorgungsmodul eine Hilfsspannungsanpassungsvorrichtung aufweist, um die Hilfsspannung auf die Ausgangsspannung anzupassen. Somit kann eine Hilfsenergiequelle mit einer beliebigen Hilfsspannung mit oder in dem Energieversorgungsmodul verwendet werden, was dessen Flexibilität erhöht. Die Hilfsspannungsanpassungsvorrichtung kann integral mit der Hilfsenergiequelle ausgeführt sein. Die Hilfsspannungsanpassungsvorrichtung ist als Wandlerstufe abhängig von der Ausgangsspannung und der Hilfsspannung als Hoch- oder Tiefsetzer ausgeführt. Derartige Wandlerstufen können als Buck- oder Boost-Wandler ausgeführt sein und sind dem Fachmann als solche bekannt. Vorzugsweise ist die Hilfsspannungsanpassungsvorrichtung integral mit der oben genannten Schalteinrichtung ausgeführt. Insbesondere kann die Hilfsspannung variabel sein, beispielsweise bei Entladen von chemischen Energiespeichern, und auf einen konstanten Wert der Ausgangsspannung gewandelt werden.

Gemäß einer weiteren vorteilhaften Weiterbildung der Erfindung ist vorgesehen, dass das Energieversorgungsmodul zum Betrieb an einer Eingangsspannung an seinem Eingangstor ausgeführt ist, die Hilfsenergiequelle zum Laden mit einer Ladespannung ausgeführt ist, die von der Eingangsspannung unterschiedlich ist, und das Energieversorgungsmodul eine Ladespannungsanpassungsvorrichtung aufweist, um die Eingangsspannung auf die Ladespannung anzupassen. Somit kann eine aufladbare Hilfsenergiequelle mit einer beliebigen Ladespannung mit oder in dem Energieversorgungsmodul verwendet werden, was dessen Flexibilität erhöht. Die Ladespannungsanpassungsvorrichtung kann integral mit der Hilfsenergiequelle ausgeführt sein. Die Ladespannungsanpassungsvorrichtung ist als Wandlerstufe abhängig von der Eingangsspannung und der Ladespannung als Hoch- oder Tiefsetzer ausgeführt. Derartige Wandlerstufen können als Buck- oder Boost-Wandler ausgeführt sein und sind dem Fachmann als solche bekannt. Vorzugsweise ist die Ladespannungsanpassungsvorrichtung integral mit der oben genannten Schalteinrichtung ausgeführt. Weiter bevorzugt ist die Ladespannungsanpassungsvorrichtung integral mit der Hilfsspannungsanpassungsvorrichtung ausgeführt. Ladespannung und Hilfsspannung sind vorzugsweise identische, können aber auch unterschiedlich ausgeführt sein. Insbesondere kann die Ladespannung variabel sein, um beispielsweise bei chemischen Energiespeichern den Ladevorgang zu optimieren.

Gemäß einer vorteilhaften Weiterbildung der Erfindung ist vorgesehen, dass das Energieversorgungsmodul einen Kondensator umfasst, der zwischen der Trenneinrichtung und dem Ausgangstor parallel dazu verbunden ist. Der Kondensator ist mit einer hohen Speicherkapazität ausgeführt und deckt bei Eingangsspannungseinbrüchen schnell den Energiebedarf von am Ausgangstor angeschlossenen Verbrauchern ab. Bei Einbrüchen der Eingangsspannung ist daher eine schnelle Betätigung der Trenneinrichtung erforderlich.

Die Erfindung betrifft weiterhin die Verwendung einer elektrische Trenneinrichtung mit zwei Transistoren und zwei Dioden, wobei die Transistoren umgekehrt in Reihe geschaltet sind, und zu jedem Transistor eine Diode invers zu seiner Stromrichtung geschaltet ist, in einem Energieversorgungsmodul zwischen einem Eingangstor zum Anschluss an eine Stromquelle und einem Ausgangstor als unterbrechungsfreie Stromversorgung, wobei eine Hilfsenergiequelle parallel zu dem Eingangstor und dem Ausgangstor zwischen der Trenneinrichtung und dem Ausgangstor positioniert ist.

Die Erfindung betrifft ebenfalls ein Verfahren zum Betrieb eines vorgenannten Energieversorgungsmoduls. Dabei wird die Trenneinrichtung derart angesteuert, dass der Transistor in Stromrichtung von dem Eingangstor zu dem Ausgangstor leitend geschaltet wird, wenn die Eingangsspannung um einen Grenzwert größer als die Ausgangsspannung ist, und umgekehrt.

Diese Ansteuerung kann einfach und zeitunkritisch implementiert werden. Die entsprechende Diode leitet den Strom in Stromrichtung von dem Eingangstor zu dem Ausgangstor, wenn die Differenz aus der Eingangsspannung und der Ausgangsspannung positiv aber kleiner als der Grenzwert ist. Somit ist bereits der Betrieb des Energieversorgungsmoduls sichergestellt. Wenn die Differenz aus der Eingangsspannung und der Ausgangsspannung größer als der Grenzwert ist, kann der Transistor leitend geschaltet werden, um auftretende Verluste zu reduzieren und den Strom zu übernehmen. Wenn die Ausgangsspannung wieder ansteigt und die Spannungsdifferenz unter den Grenzwert sinkt wird der Transistor gesperrt, so dass die Diode wieder den Strom leitet. Sobald die Ausgangsspannung größer als die Eingangsspannung ist, sperrt die Diode. Diese Ansteuerung des Energieversorgungsmoduls verhindert somit auf einfache Weise und unmittelbar einen Stromfluss durch die Trenneinrichtung zu dem Eingangstor, wodurch auf einen Spannungsabfall am Eingangstor automatisch und effizient reagiert werden kann. Das Schalten des Transistors ist zeitunkritisch und die Anzahl der Schaltvorgänge ist dadurch reduziert, dass lediglich beim Über- bzw. Unterschreiten des Grenzwertes eine Ansteuerung erfolgt.

Gemäß einer vorteilhaften Weiterbildung der Erfindung ist vorgesehen, dass die Trenneinrichtung derart angesteuert wird, dass der Transistor in Stromrichtung von dem Ausgangstor zu dem Eingangstor sperrend geschaltet wird, wenn die die Ausgangsspannung zusammenbricht. Diese Ansteuerung entspricht einer Überlast an dem Ausgangstor, beispielsweise durch einen Kurzschluss. In diesem Fall erfolgt die Ansteuerung der Trenneinrichtung, um Eingangstor und Ausgangstor zu trennen, so dass Rückwirkungen der Überlast auf die Eingangsseite verhindert werden. Die Trennung erfolgt nur in der Richtung von dem Eingangstor in das Energieversorgungsmodul. Somit kann mit einer schnellen Ansteuerung lediglich des Transistors in Stromrichtung von dem Ausgangstor zu dem Eingangstor dieser Schutz bewirkt werden. Vorzugsweise ist dieser Transistor zur Realisierung schneller Schaltvorgänge ausgeführt.

Gemäß einer vorteilhaften Weiterbildung der Erfindung ist vorgesehen, dass nach dem Sperren des Transistors in Stromrichtung von dem Ausgangstor zu dem Eingangstor die Trenneinrichtung derart angesteuert wird, dass der Transistor in Stromrichtung von dem Ausgangstor zu dem Eingangstor mit einer vorgegebenen Frequenz leitend geschaltet wird. Durch das wiederholte Schalten des Transistors wird überprüft, ob die Überlast am Ausgangstor noch vorliegt. Sobald die Überlast beseitigt ist kann der Betrieb des Energieversorgungsmoduls wieder gestartet werden.

Nachfolgend wird die Erfindung unter Bezugnahme auf die anliegende Zeichnung anhand bevorzugter Ausführungsformen näher erläutert.

Es zeigen
- Fig. 1: ein Schaltbild eines erfindungsgemäßen Energieversorgungsmoduls mit einer Hilfsenergiequelle gemäß einer ersten Ausführungsform mit eingansseitiger und ausgangsseitiger Beschaltung,
- Fig. 2: ein Schaltbild einer Detailansicht einer Trenneinrichtung des Energieversorgungsmoduls aus Fig. 1 gemäß der ersten Ausführungsform der Erfindung,
- Fig. 3: ein Schaltbild einer Detailansicht der Trenneinrichtung gemäß Fig. 2 gemäß der ersten Ausführungsform der Erfindung,
- Fig. 4: eine Tabelle, welche die Zustände der einzelnen Transistoren und Dioden der Trenneinrichtung und Schalteinrichtung der ersten Ausführungsform zeigt,
- Fig. 5: ein Zeitdiagram, dass beispielhaft die Schaltzustände der Transistoren der Trenneinrichtung abhängig von einer Differenz von Eingangsspannung und Ausgangsspannung des Energieversorgungsmoduls der ersten Ausführungsform zeigt,
- Fig. 6: eine schematische Darstellung eines PID-Reglers zur Ansteuerung der Trenneinrichtung aus Fig. 2,
- Fig. 7: ein Schaltbild einer Detailansicht einer Trenneinrichtung des Energieversorgungsmoduls gemäß einer zweiten Ausführungsform der Erfindung,
- Fig. 8: ein Schaltbild eines Energieversorgungsmoduls mit einer Hilfsenergiequelle gemäß einer dritten Ausführungsform der Erfindung mit eingangsseitiger und ausgangsseitiger Beschaltung,
- Fig. 9: ein Schaltbild eines Energieversorgungsmoduls mit einer Hilfsenergiequelle gemäß einer vierten Ausführungsform der Erfindung,
- Fig. 10: das Schaltbild des Energieversorgungsmoduls aus Fig. 9 mit im Detail gezeigter Trennvorrichtung, und
- Fig. 11: ein Schaltbild eines Energieversorgungsmoduls gemäß einer fünften Ausführungsform.

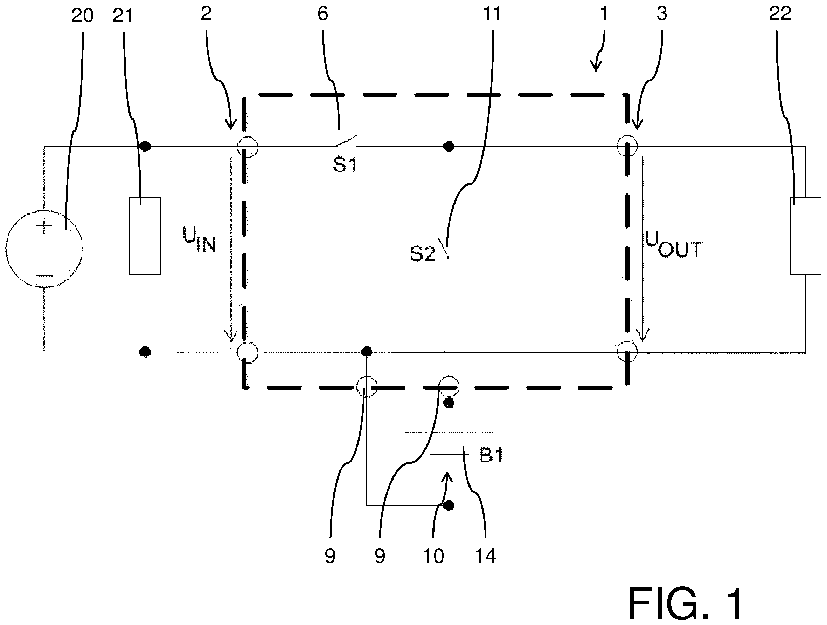

Die Figuren 1 bis 6 betreffen ein Energieversorgungsmodul 1 gemäß einer ersten Ausführungsform der Erfindung. Das Energieversorgungsmodul 1 ist mit einem Eingangstor 2 und einem Ausgangstor 3 ausgeführt. Das Eingangstor 2 und das Ausgangstor 3 sind über eine elektrische Trenneinrichtung 6 trennbar durchverbunden. An dem Eingangstor 2 liegt eine Eingangsspannung U_{IN} und an dem Ausgangstor 3 liegt eine Ausgangsspannung U_{OUT} an, die in einem nicht getrennten Zustand im Wesentlichen gleich sind.

Das Energieversorgungsmodul 1 ist über elektrische Kontakte 9 mit einer Hilfsenergiequelle 10 trennbar verbunden, so dass die Hilfsenergiequelle 10 bei Bedarf einfach ausgetauscht werden kann. Die Hilfsenergiequelle 10 ist in diesem Ausführungsbeispiel als wiederaufladbarer Energiespeicher, genauer als Akkumulator 14, ausgeführt. Sie ist über die Kontakte 9 zwischen der Trenneinrichtung 6 und dem Ausgangstor 3 parallel zu dem Eingangstor 2 und dem Ausgangstor 3 verbunden. In der Verbindung der Hilfsenergiequelle 10 mit den Toren 2, 3 ist eine Schalteinrichtung 11 eingebracht, durch die die Hilfsenergiequelle 10 von den Toren 2, 3 getrennt werden kann.

In einer alternativen Ausführungsform ist das Energieversorgungsmodul 1 integral mit der Hilfsenergiequelle 10 ausgeführt. Entsprechend sind die Kontakte 9 als interne Kontakte zur Verbindung der Hilfsenergiequelle 10 ausgeführt. Im Übrigen ist die Funktion des Energieversorgungsmoduls 1 der alternativen Ausführungsform wie zuvor beschrieben.

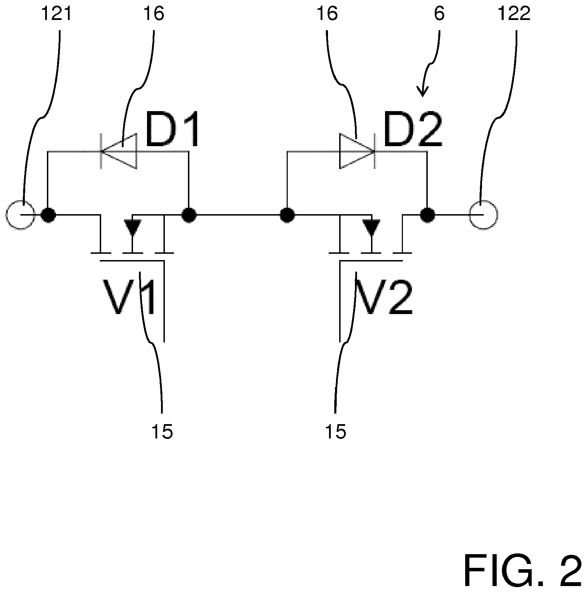

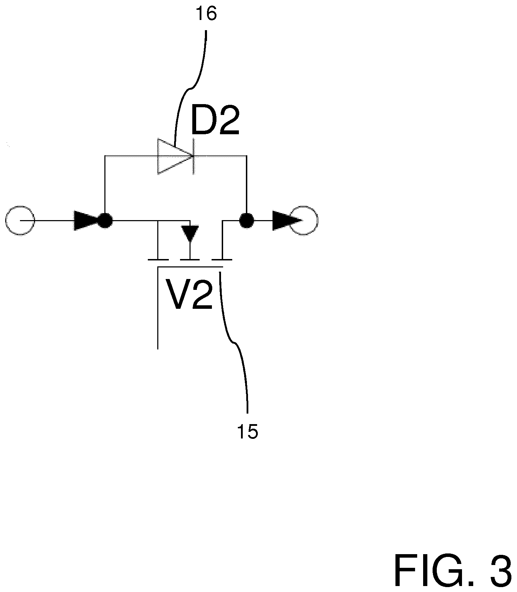

Im Weiteren wird der Aufbau der Trenneinrichtung 6 sowie der Schalteinrichtung 11 im Detail beschrieben. Die Trenneinrichtung 6 und die Schalteinrichtung 11 sind prinzipiell identisch aufgebaut, sodass ihr Aufbau gemeinsam beschrieben wir. Die Trenneinrichtung 6 und die Schalteinrichtung 11 umfassen in diesem Ausführungsbeispiel, das im Detail in Figs. 2 und 3 gezeigt ist, jeweils zwei Transistoren 15, die in dem ersten Ausführungsbeispiel als Feldeffekttransistoren ausgeführt sind, und zwei Dioden 16. Die Transistoren 15 sind umgekehrt in Reihe geschaltet, wobei zu jedem Transistor 15 eine Diode 16 invers zu seiner Stromrichtung geschaltet ist. In diesem Ausführungsbeispiel sind die Transistoren 15 als N-Kanal MOSFETs ausgeführt, wobei in einer alternativen Ausführungsform auch die Verwendung von P-Kanal MOSFETs möglich ist.

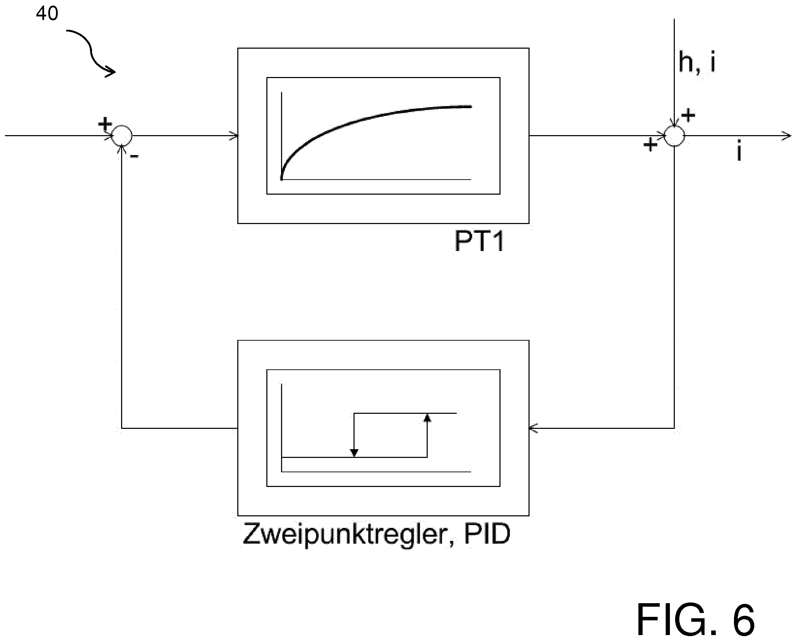

Weiterhin umfasst das Energieversorgungsmodul 1 eine nicht gezeigte Steuerungseinrichtung, welche die Trenneinrichtung 6 und die Schalteinrichtung 11 steuert. Die Steuerungseinrichtung ist insbesondere ausgeführt, Eingangsstrom und/oder -Spannung U_{IN} am Eingangstor 2 des Energieversorgungsmoduls 1 zu erfassen, und bei Schwankungen von Strom und/oder Spannung am Eingangstor 2 die Trenneinrichtung 6 zu betätigen, um das Eingangstor 2 von dem Ausgangstor 3 zu trennen. Außerdem ist die Steuerungseinrichtung ausgeführt, die Schalteinrichtung 11 zu betätigen, um bei Schwankungen von Strom und/oder Spannung am Eingangstor 2 die Ausgangsspannung U_{OUT} am Ausgangstor 3 über die Hilfsenergiequelle bereitzustellen. Weiter ist die Steuerungseinrichtung ausgeführt, den Akkumulator 14 über das Eingangstor 2 zu laden. Die Steuerungseinrichtung umfasst einen PID-Regler 40, der in Fig. 6 dargestellt ist.

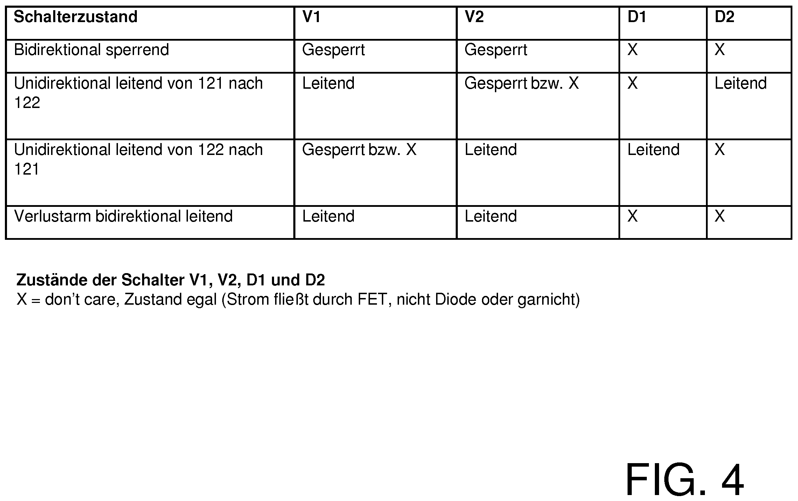

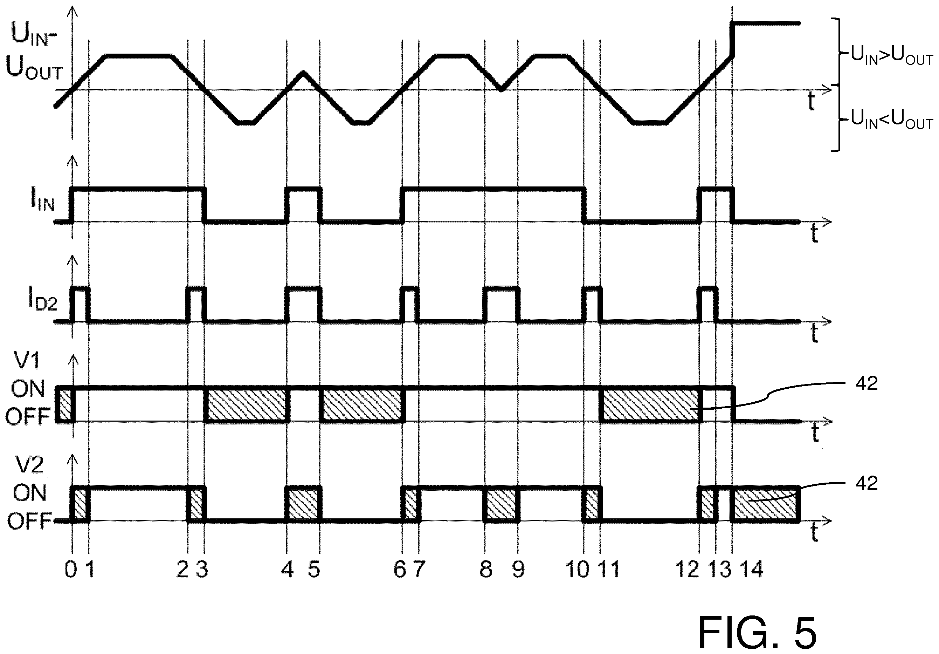

Die Trenneinrichtung 6 und die Schalteinrichtung 11 können über die Steuerungseinrichtung sowohl vollständig gesperrt, in jeweils eine Richtung leitend oder verlustarm bidirektional leitend geschaltet werden, wie sich aus der Tabelle in Fig. 4 ergibt. In der Tabelle werden die einzelnen Transistoren 15 und Dioden 16, wie in Figuren 2 und 3 gekennzeichnet, als V1, V2 bzw. D1, D2 unterschieden. Details zum Betrieb werden nachfolgend unter zusätzlichem Bezug auf Fig. 5 beschrieben.

Fig. 1 zeigt das Energieversorgungsmodul 1 im angeschlossenen Zustand zum Betrieb des Ausgangstors 3 als unterbrechungsfreie Stromversorgung. Das Energieversorgungsmodul 1 ist über eine Versorgungsleitung 19 an eine Stromquelle 20 angeschlossen. Die Stromquelle 20 ist zur Bereitstellung eines Gleichstroms ausgeführt. Zwischen dem Eingangstor 2 des Energieversorgungsmoduls 1 und der Stromquelle 20 ist außerdem eine eingangsseitige Last 21 angeschlossen, und an dem Ausgangstor 3 eine ausgangsseitige Last 22.

Die Steuerungseinrichtung ist ausgeführt, bei dem Ausfall der Stromquelle 20 den Energiebedarf der ausgangsseitigen Last 22 über die Hilfsenergiequelle 10 zu decken. Dabei ist es erforderlich, dass die Trenneinrichtung 6 schnell sperrt, um einen Stromfluss von der Hilfsenergiequelle 10 über das Eingangstor 2 zu verhindern und die ausgangsseitige Last 22 ohne Unterbrechung zu betreiben. Auch werden Ausgleichsströme bei Schwankungen der Eingangsspannung U_{IN} am oder bei der Verwendung einer stark induktiven Stromquelle 4 unterdrückt.

Die Steuerungseinrichtung ist des Weiteren ausgeführt, bei dem Ausfall der Stromquelle 20 die Schalteinrichtung 11 leitend zu schalten. Somit wird die Hilfsenergiequelle 10 mit der ausgangsseitigen Last 22 verbunden und versorgt diese nach der Art einer unterbrechungsfreien Stromversorgung. Entsprechend wird die an den Kontakten 9 anliegende Hilfsspannung als Ausgangsspannung U_{OUT} an dem Ausgangstor 3 bereitgestellt. Damit wird der Betrieb der ausgangsseitigen Last 22 aufrechterhalten. Sobald die korrekte Funktion der Stromquelle 20 von der Steuerungseinrichtung festgestellt wird, wird die ausgangsseitige Last 22 wieder von der Stromquelle 20 über die Trenneinrichtung 6 gespeist und die Schalteinrichtung 11 trennt die Hilfsenergiequelle 10. Zusätzlich erfolgt von der Steuereinrichtung eine Ansteuerung der Schalteinrichtung 11, um die Hilfsenergiequelle 10 an der Stromquelle 20 zu laden.

Im Weiteren wird ein Verfahren zum Betrieb der Trenneinrichtung 6 unter Bezug auf Figuren 4 und 5 im Detail beschrieben.

In einem Betriebszustand ist die Eingangsspannung U_{IN} größer als die Ausgangsspannung U_{OUT}. Entsprechend liegt eine Differenz der Eingangsspannung U_{IN} und der Ausgangsspannung U_{OUT} über einem Grenzwert, wie dies beispielhaft zwischen den Zeitpunkten 1 und 2 in Fig. 5 der Fall ist. Entsprechend sind die Transistoren 15 beide durch die Steuerungseinrichtung leitend geschaltet und die Trenneinrichtung 6 befindet sich im Betriebszustand "verlustarm bidiretional leitend" gemäß der Tabelle in der Fig. 4.

In einem Betriebszustand, der beispielsweise zwischen den Zeitpunkten 2 und 3 in Fig. 5 vorliegt, ist die Eingangsspannung U_{IN} größer als die Ausgangsspannung U_{OUT}. Allerdings ist die Differenz der Eingangsspannung U_{IN} und der Ausgangsspannung U_{OUT} kleiner als der Grenzwert. Entsprechend wird der mit V2 gekennzeichnete Transistor 15 von der Steuerungseinrichtung sperrend geschaltet. Der Strom fließt wieder durch die mit D2 gekennzeichnete Diode 16, und die Trenneinrichtung 6 wird in dem Zustand "unidirektional leitend von 121 nach 122" gemäß der Tabelle in Fig. 4 betrieben.

Sobald die Ausgangsspannung U_{OUT} größer als die Eingangsspannung U_{IN} wird, sperrt die mit D2 gekennzeichnete Diode 16 automatisch, und ein Stromfluß durch das Eingangstor 2 in Richtung zu der eingangsseitigen Last 21 und der Stromquelle 20 wird verhindert. Dies betrifft beispielsweise den Zeitpunkt 3 in Fig. 5.

Im Anschluss an den Zeitpunkt 3 wird der mit V1 gekennzeichnete Transistor 15 zeitunkritisch sperrend geschaltet. Die Trenneinrichtung 6 ist somit im Betriebszustand "bidirektional sperrend" gemäß der Tabelle in Fig. 4. Dieser Zustand wird durch ein zeitunkritisches leitend schalten des mit V1 gekennzeichneten Transistors 15 durch die Steuerungseinrichtung vor dem Erreichen des Zeitpunktes 4 in der Fig. 5 wieder in den Zustand "unidirektional leitend von 121 nach 122" geändert, wie zuvor beschrieben.

Sobald die Eingangsspannung U_{IN} wieder größer als die Ausgangsspannung U_{OUT} wird, wird durch die mit D2 gekennzeichnete Diode 15 automatisch der Stromfluß von der Stromquelle 20 durch das Eingangstor 2 in Richtung zu dem Ausgangstor 3 freigegeben, sodass die ausgangsseitige Last 22 wieder von der Stromquelle 20 versorgt wird. Dies geschieht beispielsweise zum Zeitpunkt 4 in Fig. 5.

Wenn die Differenz der Eingangsspannung U_{IN} und der Ausgangsspannung U_{OUT} wieder über den Grenzwert steigt, wie beispielsweise zum Zeitpunkt 7 in Fig. 5, wird zur Reduktion der Verluste wieder in den Betriebszustand "verlustarm bidiretional leitend" gewechselt.

Schraffierten Flächen 42, die in Fig. 5 gezeigt sind, stellen jeweils die wie oben beschrieben zeitunkritischen Änderungen der Betriebszustände der dar.

Zum Zeitpunkt 14 in Fig. 5 wird tritt durch die ausgangsseitige Last 22 ein Kurzschluss am Ausgangstor 3 auf, wodurch der Ausgang überlastet wird. Zur Reduzierung des Spannungseinbruchs am Eingangstor 2 wird der mit V1 gekennzeichnete Transistor 15 geöffnet und der Stromfluß von der Stromquelle 20 durch die Trenneinrichtung 6 unterbrochen. Durch eine schnelle Ansteuerung des mit V1 gekennzeichneten Transistors 15 durch die Steuerungseinrichtung wird die Stromquelle 20 geschützt und die eingangsseitige Last 21 kann von der Stromquelle 20 weiter betrieben werden. Die Trenneinrichtung 6 arbeitet zunächst "unidirektional leitend von 122 nach 121" gemäß Tabelle 4. Mit Abschaltung des mit V2 gekennzeichneten Transistors 15 durch die Steuerungseinrichtung wirkt die Trenneinrichtung 6 bidirektional sperrend.

Im Anschluss an den Zeitpunkt 14 in Fig. 5 wird der mit V1 gekennzeichnete Transistor 15 durch die Steuerungseinrichtung mit einer vorgegebenen Frequenz leitend geschaltet, um das Verhalten der ausgangsseitigen Last 22 zu überprüfen. Hierbei kann der mit V1 gekennzeichnete Transistor 15 nieder- oder hochfrequent getaktet werden. Sobald der Kurzschluss beseitigt ist, wird wieder in den Betrieb des Energieversorgungsmoduls 1 zur Versorgung der ausgangsseitigen Last 22 gewechselt.

In Übereinstimmung mit dem zuvor beschriebenen Betrieb der Trenneinrichtung 6 durch die Steuerungseinrichtung wird ein Ausfall der Stromquelle 20 von dieser erfasst. Zusätzlich wird in diesem Fall durch die Steuerungseinrichtung die Versorgung der ausgangsseitigen Last 22 durch die Hilfsenergiequelle 10 durch Betätigung der Schalteinrichtung 11 gestartet. Nach dem Ende des Ausfalls wird die Schalteinrichtung 11 durch die Steuerungseinrichtung betätigt, um die Versorgung der ausgangsseitigen Last 22 durch die Hilfsenergiequelle 10 zu beenden.

Im Weiteren werden verschieden Ausführungsformen abgewandelter Energieversorgungsmodule 1 beschrieben. Die abgewandelten Energieversorgungsmodule 1 stimmen im Wesentlichen mit dem zuvor beschriebenen überein, weshalb im Folgenden nur auf Unterschiede zwischen den jeweiligen Ausführungsformen eingegangen wird. Entsprechend werden identische Bezugszeichen für gleich oder ähnliche Komponenten verwendet.

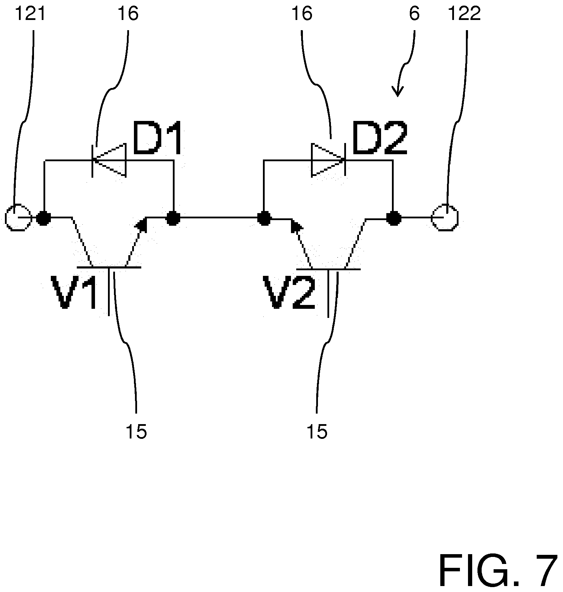

Ein zweites Ausführungsbeispiel, das in Fig. 7 gezeigt ist, unterscheidet sich von dem ersten lediglich durch die Ausgestaltung der Transistoren 15 der Trenneinrichtung 6 und der Schalteinrichtung 11. Die Transistoren 15 sind in diesem Ausführungsbeispiel als NPN-Bipolartransistoren ausgeführt. Alternativ ist auch die Verwendung von PNP-Bipolartransistoren möglich.

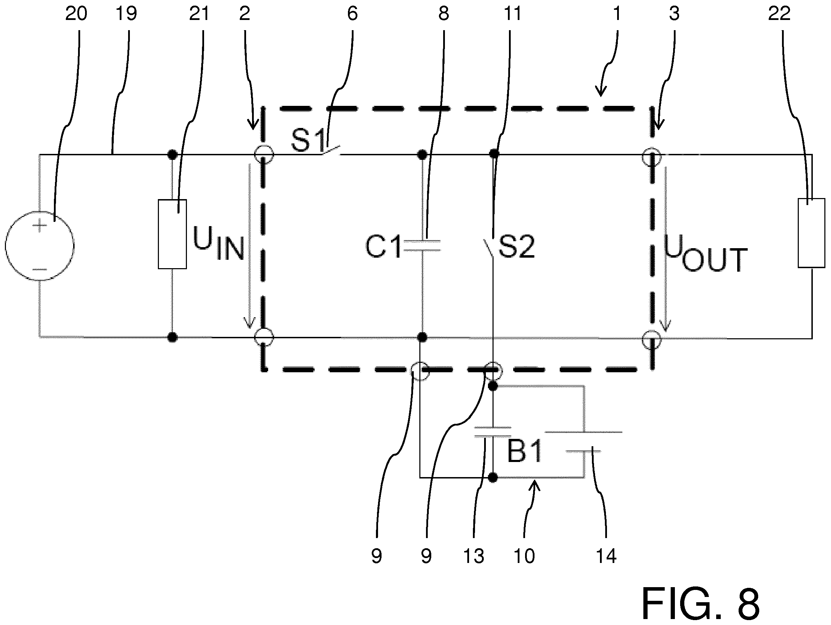

Ein drittes Ausführungsbeispiel der Erfindung ist in Fig. 8 gezeigt. Das dritte Ausführungsbeispiel unterscheidet sich von dem ersten lediglich durch einen zusätzlichen Kondensator 8 und die Ausgestaltung der Hilfsenergiequelle 10. Der Kondensator 8 ist parallel zu dem Eingangstor 2 und dem Ausgangstor 3 zwischen der Trenneinrichtung 6 und dem Ausgangstor 3 positioniert. Die Hilfsenergiequelle 10 umfasst im Detail ein Kondensatormodul 13 und einen Akkumulator 14. Das Kondensatormodul 13 umfasst eine Mehrzahl hier nicht einzeln gezeigter Kondensatoren, die als Elektrolytkondensatoren oder Doppelschichtkondensatoren ausgeführt sind. Der Akkumulator 14 ist in diesem Ausführungsbeispiel als Bleiakku ausgeführt. In einer alternativen Ausführungsform ist der Akkumulator 14 als Lithiumakkumulator ausgeführt.

Die Steuerungseinrichtung ist in dem dritten Ausführungsbeispiel ausgeführt, bei dem Ausfall der Stromquelle 20 den Energiebedarf der ausgangsseitigen Last 22 zunächst über den Kondensator 8 zu decken. Daher ist es erforderlich, dass die Steuerungseinrichtung die Trenneinrichtung 6 schnell ansteuert, um einen Stromfluss von dem Kondensator 8 über das Eingangstor 2 zu verhindern. Somit werden auch Ausgleichsströme durch den Kondensator 8 bei Schwankungen der Eingangsspannung U_{IN} oder bei der Verwendung einer stark induktiven Stromquelle 4 unterdrückt.

Auch gemäß der dritten Ausführungsform wird die Hilfsenergiequelle 10 durch die Schalteinrichtung 11 mit der ausgangsseitigen Last 22 verbunden und versorgt diese nach der Art einer unterbrechungsfreien Stromversorgung. Entsprechend wird die an den Kontakten 9 anliegende Hilfsspannung als Ausgangsspannung U_{OUT} an dem Ausgangstor 3 bereitgestellt. Damit wird der Betrieb der ausgangsseitigen Last 22 aufrechterhalten. Sobald die korrekte Funktion der Stromquelle 20 von der Steuerungseinrichtung festgestellt wird, wird die Schalteinrichtung 11 wieder zurückgeschaltet, und die ausgangsseitige Last 22 wird von der Stromquelle 20 versorgt. Zusätzlich wird die Hilfsenergiequelle 10 über die Schalteinrichtung 11 von der Stromquelle 20 geladen.

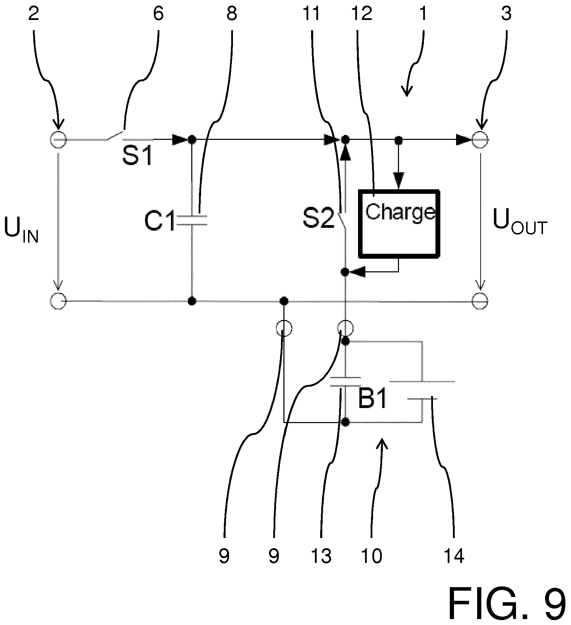

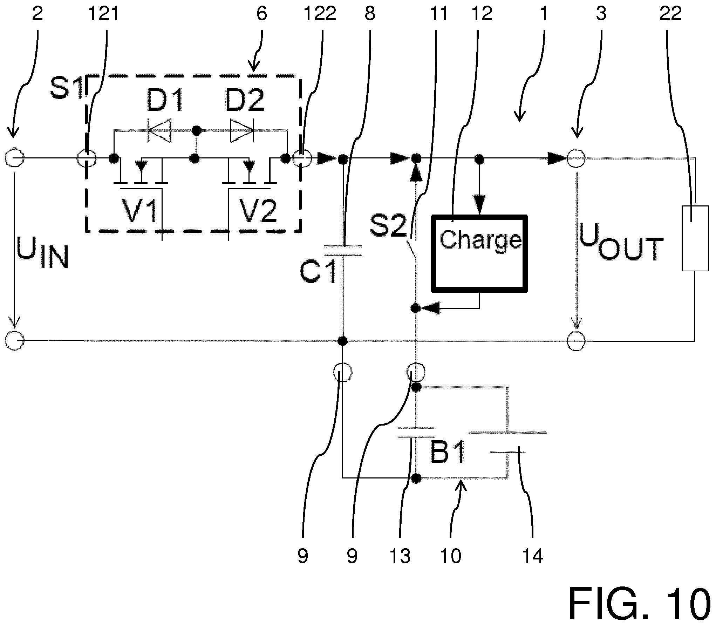

Ein Energieversorgungsmodul 1 gemäß einer vierten Ausführungsform ist in Figuren 9 und 10 gezeigt. Das Energieversorgungsmodul 1 der vierten Ausführungsform entspricht im Wesentlichen dem der dritten Ausführungsform und umfasst zusätzlich eine Ladeeinheit 12, die parallel zu der Schalteinrichtung 11 angeordnet ist. Die Ladeeinheit 12 dient zum Laden der Hilfsenergiequelle 10 über das Eingangstor 2. An den Kontakten 9 liegt eine Hilfsspannung an, die in diesem Ausführungsbeispiel im Wesentlichen mit der Eingangs- bzw. Ausgangsspannung U_{IN}, U_{OUT} übereinstimmt. Der Pegel der Eingangsspannung U_{IN} wird also sowohl als Ladespannung zum Laden der Hilfsenergiequelle 10 wie auch als Hilfsspannung beim Entladen der Hilfsenergiequelle 10 geliefert, und kann unmittelbar als Ausgangsspannung U_{OUT} an dem Ausgangstor 3 angelegt werden.

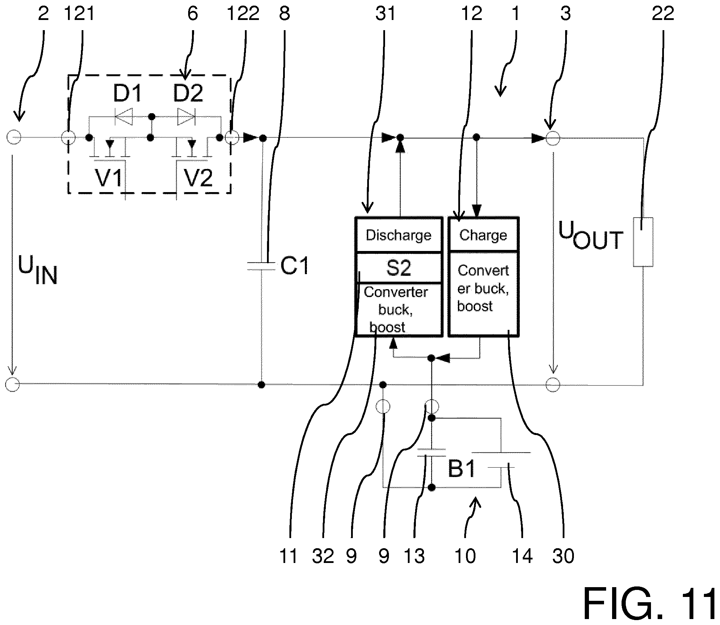

Ein Energieversorgungsmodul 1 gemäß einer fünften Ausführungsform der Erfindung wird unter Bezug auf Fig. 11 beschrieben. In der Fig. 11 ist das Energieversorgungsmodul 1 mit einer Hilfsenergiequelle 10 und einem ausgangsseitig angeschlossenen Verbraucher 22 gezeigt.

Die Hilfsenergiequelle 10 der fünften Ausführungsform ist zum Betrieb mit einer Hilfsspannung und einer Ladespannung an den Kontakten 9 ausgeführt, die von der Eingangsspannung U_{IN} und der Ausgangsspannung U_{OUT} verschieden sind. Entsprechend umfasst die Ladeeinheit 12 eine Ladespannungsanpassungsvorrichtung 30, die als Spannungswandler ausgeführt ist, um die Eingangsspannung U_{IN} für das Laden der Hilfsenergiequelle 10 auf die Ladespannung anzupassen.

Zusätzlich umfasst das Energieversorgungsmodul 1 eine Entladeeinheit 31, welche die Schalteinrichtung 11 des Energieversorgungsmoduls 1 der ersten Ausführungsform umfasst und an der gleichen Stelle in dem Energieversorgungsmodul 1 positioniert ist. Die Entladeeinheit 31 umfasst weiterhin eine in Reihe mit der Schalteinrichtung 11 geschaltete Hilfsspannungsanpassungsvorrichtung 32, die als Spannungswandler ausgeführt ist, um die Hilfsspannung auf die Ausgangsspannung U_{OUT} anzupassen.

**Bezugszeichenliste**

| | |
|---|---|
| Energieversorgungsmodul | 1 |
| Eingangstor | 2 |
| Ausgangstor | 3 |
| Trenneinrichtung | 6 |
| Kondensator | 8 |
| Kontakte | 9 |
| Hilfsenergiequelle, wiederaufladbare Energiespeicher | 10 |
| Schalteinrichtung | 11 |
| Ladeeinheit | 12 |
| Kondensatormodul | 13 |
| Akkumulator | 14 |
| Transistoren | 15 |
| Diode | 16 |
| Versorgungsleitung | 19 |
| Stromquelle | 20 |
| eingangsseitige Last | 21 |
| ausgangsseitige Last | 22 |
| Ladespannungsanpassungsvorrichtung | 30 |
| Entladeeinheit | 31 |
| Hilfsspannungsanpassungsvorrichtung | 32 |
| PID-Regler | 40 |
| Schraffierte Fläche | 42 |
| erster Schalterkontakt | 121 |
| zweiter Schalterkontakt | 122 |

## Patentansprüche

1. Energieversorgungsmodul (1) mit einem Eingangstor (2) zum Anschluss an eine Stromquelle (20) und einem Ausgangstor (3) als unterbrechungsfreie Stromversorgung, wobei
das Eingangstor (2) und das Ausgangstor (3) über eine elektrische Trenneinrichtung (6) trennbar durchverbunden sind,
eine Hilfsenergiequelle (10) parallel zu dem Eingangstor (2) und dem Ausgangstor (3) verbunden ist, wobei die Trenneinrichtung (6) zwischen der Hilfsenergiequelle (10) und dem Eingangstor (2) positioniert ist,
die Hilfsenergiequelle (10) einen wiederaufladbaren Energiespeicher umfasst und
die Trenneinrichtung (6) eine Schaltungsanordnung mit zwei Transistoren (15) und zwei Dioden (16) umfasst, wobei die Transistoren (15) umgekehrt in Reihe geschaltet sind, und zu jedem Transistor (15) je eine der Dioden (16) invers zu seiner Stromrichtung geschaltet ist,
**dadurch gekennzeichnet, dass**
das Energieversorgungsmodul (1)
- ausgeführt ist, den Energiespeicher über das Eingangstor (2) zu laden und
- eine Ladeeinheit (12) aufweist, die parallel zu einer Schalteinrichtung (11) angeordnet ist, wobei die Parallelschaltung der Ladeeinheit (12) zur Schalteinrichtung (11) derart eingerichtet ist, dass die Hilfsenergiequelle (10) mittels der Ladeeinheit (12) über das Eingangstor (2) geladen werden kann.

2. Energieversorgungsmodul (1) nach Anspruch 1,
**dadurch gekennzeichnet, dass**
die Transistoren (15) als Bipolartransistoren oder Feldeffekttransistoren ausgeführt sind.

3. Energieversorgungsmodul (1) nach Anspruch 1 oder 2, **dadurch gekennzeichnet, dass**
das Energieversorgungsmodul (1) eine Steuerungseinrichtung zum Betätigen der Schalteinrichtung (11) umfasst, wobei der Energiespeicher über die Schalteinrichtung (11) parallel mit dem Eingangstor (2) und dem Ausgangstor (3) verbindbar ist.

4. Energieversorgungsmodul (1) nach Anspruch 3,
**dadurch gekennzeichnet, dass**
die Schalteinrichtung (11) eine Schaltungsanordnung mit zwei Transistoren (15) und zwei Dioden (16) umfasst, wobei die Transistoren (15) umgekehrt in Reihe geschaltet sind, und zu jedem Transistor (15) eine Diode (16) invers zu seiner Stromrichtung geschaltet ist.

5. Energieversorgungsmodul (1) nach einem der Ansprüche 1 bis 4,
**dadurch gekennzeichnet, dass**
der wiederaufladbare Energiespeicher ein Kondensatormodul (13) mit einer Mehrzahl Kondensatoren umfasst.

6. Energieversorgungsmodul (1) nach Anspruch 5,
**dadurch gekennzeichnet, dass**
die Kondensatoren als Elektrolytkondensatoren und/oder Doppelschichtkondensatoren ausgeführt sind.

7. Energieversorgungsmodul (1) nach einem der Ansprüche 1 bis 6,
**dadurch gekennzeichnet, dass**
der wiederaufladbare Energiespeicher einen Akkumulator (14) umfasst.

8. Energieversorgungsmodul (1) nach einem der vorhergehenden Ansprüche,
**dadurch gekennzeichnet, dass**
das Energieversorgungsmodul (1) zur Bereitstellung einer Ausgangsspannung (U_{OUT}) an seinem Ausgangstor (3) ausgeführt ist,
die Hilfsenergiequelle (10) zur Bereitstellung einer Hilfsspannung ausgeführt ist, die von der Ausgangsspannung (U_{OUT}) unterschiedlich ist, und
das Energieversorgungsmodul (1) eine Hilfsspannungsanpassungsvorrichtung (32) aufweist, um die Hilfsspannung auf die Ausgangsspannung (U_{OUT}) anzupassen.

9. Energieversorgungsmodul (1) nach einem der vorhergehenden Ansprüche,
**dadurch gekennzeichnet, dass**
das Energieversorgungsmodul (1) zum Betrieb an einer Eingangsspannung (U_{IN}) an seinem Eingangstor (2) ausgeführt ist,
die Hilfsenergiequelle (10) zum Laden mit einer Ladespannung ausgeführt ist, die von der Eingangsspannung (U_{IN}) unterschiedlich ist, und
das Energieversorgungsmodul (1) eine Ladespannungsanpassungsvorrichtung (30) aufweist, um die Eingangsspannung (U_{IN}) auf die Ladespannung anzupassen.

10. Energieversorgungsmodul (1) nach einem der vorhergehenden Ansprüche,
**dadurch gekennzeichnet, dass**
das Energieversorgungsmodul (1) einen Kondensator umfasst, der zwischen der Trenneinrichtung (6) und dem Ausgangstor (3) parallel dazu verbunden ist.

11. Verwendung einer elektrischen Trenneinrichtung (6) mit zwei Transistoren (15) und zwei Dioden (16), wobei die Transistoren (15) umgekehrt in Reihe geschaltet sind, und zu jedem Transistor (15) je eine der Dioden (16) invers zu seiner Stromrichtung geschaltet ist, in einem Energieversorgungsmodul (1) nach einem der vorherigen Ansprüche zwischen einem Eingangstor (2) zum Anschluss an eine Stromquelle (4) und einem Ausgangstor (3) als unterbrechungsfreie Stromversorgung, wobei eine Hilfsenergiequelle (10) parallel zu dem Eingangstor (2) und dem Ausgangstor (3) zwischen der Trenneinrichtung (6) und dem Ausgangstor (3) positioniert ist.

12. Verfahren zum Betrieb eines Energieversorgungsmoduls (1) nach einem der Ansprüche 1 bis 10,
**dadurch gekennzeichnet, dass**
die Trenneinrichtung (6) derart angesteuert wird, dass der Transistor (15) in Stromrichtung von dem Eingangstor (2) zu dem Ausgangstor (3) leitend geschaltet wird, wenn die Eingangsspannung (U_{IN}) am Eingangstor (2) um einen Grenzwert größer als die Ausgangsspannung (U_{OUT}) am Ausgangstor (2) ist, und umgekehrt.

13. Verfahren nach Anspruch 12,
**dadurch gekennzeichnet, dass**
die Trenneinrichtung (6) derart angesteuert wird, dass der Transistor (15) in Stromrichtung von dem Ausgangstor (3) zu dem Eingangstor (2) sperrend geschaltet wird, wenn die Ausgangsspannung (U_{OUT}) zusammenbricht.

14. Verfahren nach Anspruch 13,
**dadurch gekennzeichnet, dass**
nach dem Sperren des Transistors (15) in Stromrichtung von dem Ausgangstor (3) zu dem Eingangstor (2) die Trenneinrichtung (6) derart angesteuert wird, dass der Transistor (15) in Stromrichtung von dem Ausgangstor (3) zu dem Eingangstor (2) mit einer vorgegebenen Frequenz leitend geschaltet wird.

## Claims

1. An energy supply module (1) comprising an input gate (2) for connection to a power source (20) and an output gate (3) as an interruption-free power supply, wherein
the input gate (2) and the output gate (3) are through-connected separably via an electrical separating device (6),
an auxiliary energy source (10) is connected in parallel with the input gate (2) and the output gate (3), wherein the separating device (6) is positioned between the auxiliary energy source (10) and the input gate (2),
the auxiliary energy source (10) comprises a rechargeable energy store, and
the separating device (6) is a circuit arrangement with two transistors (15) and two diodes (16), wherein the transistors (15) are connected reversely in series, and the diodes (16) are connected one to each transistor (15), inversely to the current direction of said diode,
**characterised in that**
the energy supply module (1)
- is designed to charge the energy store via the input gate (2), and
- has a charging unit (12), which is arranged parallel to a switching device (11), wherein the connection in parallel of the charging unit (12) to the switching device (11) is designed in such a way that the auxiliary energy source (10) can be charged by means of the charging unit (12) via the input gate (2).

2. The energy supply module (1) according to claim 1,
**characterised in that**
the transistors (15) are formed as bipolar transistors or field-effect transistors.

3. The energy supply module (1) according to claim 1 or 2, **characterised in that**
the energy supply module (1) comprises a control device for actuating the switching device (11), wherein the energy store can be connected in parallel with the input gate (2) and the output gate (3) via the switching device (11).

4. The energy supply module (1) according to claim 3,
**characterised in that**
the switching device (11) comprises a circuit arrangement with two transistors (15) and two diodes (16), wherein the transistors (15) are connected reversely in series, and a diode (16) is connected to each transistor (15), inversely to the current direction of said diode.

5. The energy supply module (1) according to any one of claims 1 to 4,
**characterised in that**
the rechargeable energy store comprises a capacitor module (13) with a plurality of capacitors.

6. The energy supply module (1) according to claim 5,
**characterised in that**
the capacitors are embodied as electrolytic capacitors and/or double-layer capacitors.

7. The energy supply module (1) according to any one of claims 1 to 6, **characterised in that** the rechargeable energy store comprises an accumulator (14).

8. The energy supply module (1) according to any one of the preceding claims,
**characterised in that**
the energy supply module (1) is designed to provide an output voltage (U_{OUT}) at its output gate (3),
the auxiliary energy source (10) is designed to provide an auxiliary voltage that is different from the output voltage (U_{OUT}), and
the energy supply module (1) has an auxiliary voltage adjustment device (32) in order to adjust the auxiliary voltage to the output voltage (U_{OUT}).

9. The energy supply module (1) according to any one of the preceding claims,
**characterised in that**
the energy supply module (1) is designed for operation at an input voltage (U_{IN}) at its input gate (2),
the auxiliary energy source (10) is configured for charging with a charging voltage that is different from the input voltage (U_{IN}), and
the energy supply module (1) has a charging voltage adjustment device (30) in order to adjust the input voltage (U_{IN}) to the charging voltage.

10. The energy supply module (1) according to any one of the preceding claims,
**characterised in that**
the energy supply module (1) comprises a capacitor that is to be connected in parallel between the separating device (6) and the output gate (3).

11. Use of an electrical separating device (6) with two transistors (15) and two diodes (16), wherein the transistors (15) are connected reversely in series, and the diodes (16) are connected one to each transistor (15), inversely to the current direction of said diode, in an energy supply module (1) according to any one of the preceding claims between an input gate (2) for connection to a power source (4) and an output gate (3) configured as an interruption-free power supply, wherein an auxiliary energy source (10) is positioned parallel to the input gate (2) and the output gate (3) between the separating device (6) and the output gate (3).

12. A method for operating an energy supply module (1) according to any one of claims 1 to 10,
**characterised in that**
the separating device (6) is actuated in such a way that the transistor (15) is conductively connected in the current direction from the input gate (2) to the output gate (3) when the input voltage (U_{IN}) at the input gate (2) is greater hen the output voltage (U_{OUT}) at the output gate (2) by a limit value, and vice versa.

13. The method according to claim 12,
**characterised in that**
the separating device (6) is actuated in such a way that the transistor (15) is connected so as to be blocking in the current direction from the output gate (3) to the input gate (2) when the output voltage (U_{OUT}) breaks down.

14. The method according to claim 13,
**characterised in that**
following the blocking of the transistor (15) in the current direction from the output gate (3) to the input gate (2), the separating device (6) is actuated in such a way that the transistor (15) is conductively connected in the current direction from the output gate (3) to the input gate (2) with a predefined frequency.

## Revendications

1. Module d'alimentation en énergie (1) doté d'un port d'entrée (2) pour le raccordement à une source de courant (20) et d'un port de sortie (3) sous la forme d'une alimentation en courant exempte d'interruptions, où
le port d'entrée (2) et le port de sortie (3) sont reliés de manière amovible par le biais d'un dispositif de séparation (6) électrique,
une source d'énergie auxiliaire (10) est reliée parallèlement par rapport au port d'entrée (2) et au port de sortie (3), où le dispositif de séparation (6) est positionné entre la source d'énergie auxiliaire (10) et le port d'entrée (2),
la source d'énergie auxiliaire (10) comprend un accumulateur d'énergie rechargeable et
le dispositif de séparation (6) comprend un ensemble de commutation avec deux transistors (15) et deux diodes (16), où les transistors (15) sont branchés inversement en série, et à chaque transistor (15) est raccordée l'une des diodes (16) inversement par rapport à son sens du courant,
**caractérisé en ce que**
le module d'alimentation en énergie (1) est conçu pour charger l'accumulateur d'énergie par le biais du port d'entrée (2), et
présente une unité de charge (12) qui est disposée parallèlement par rapport à un dispositif de commutation (11), où la commutation en parallèle de l'unité de charge (12) est conçue de telle manière par rapport au dispositif de commutation (11) que la source d'énergie auxiliaire (10) peut être chargée au moyen de l'unité de charge (12) par le biais du port d'entrée (2).

2. Module d'alimentation en énergie selon la revendication 1,
**caractérisé en ce que**
les transistors (15) sont conçus sous forme de transistors bipolaires ou de transistors à effet de champ.

3. Module d'alimentation en énergie selon la revendication 1 ou 2,
**caractérisé en ce que**
le module d'alimentation en énergie (1) comprend un dispositif de commande pour l'actionnement du dispositif de commutation (11), où l'accumulateur d'énergie peut être relié en parallèle avec le port d'entrée (2) et le port de sortie (3) par le biais du dispositif de commutation (11).

4. Module d'alimentation en énergie selon la revendication 3,
**caractérisé en ce que**
le dispositif de commutation (11) comprend un ensemble de commutation avec deux transistors (15) et deux diodes (16), où les transistors (15) sont branchés en série inversement, et pour chaque transistor (15), une diode (16) est branchée inversement par rapport à son sens du courant.

5. Module d'alimentation en énergie selon l'une des revendications 1 à 4,
**caractérisé en ce que**
l'accumulateur d'énergie rechargeable comprend un module de condensateur (13) avec une pluralité de condensateurs.

6. Module d'alimentation en énergie selon la revendication 5,
**caractérisé en ce que**
les condensateurs sont conçus sous forme de condensateurs à électrolyte et/ou de condensateurs à double couche.

7. Module d'alimentation en énergie selon l'une des revendications 1 à 6,
**caractérisé en ce que**
l'accumulateur d'énergie rechargeable comprend un accumulateur (16).

8. Module d'alimentation en énergie selon l'une des revendications précédentes,
**caractérisé en ce que**
le module d'alimentation en énergie (1) est conçu pour la mise en place d'une tension de sortie (U_{OUT}) au niveau de son port de sortie (3),
la source d'énergie auxiliaire (10) est conçue pour la mise en place d'une tension auxiliaire qui est différente de la tension de sortie (U_{OUT}), et
le module d'alimentation en énergie (1) présente un dispositif d'adaptation de tension auxiliaire (32) afin d'adapter la tension auxiliaire à la tension de sortie (U_{OUT}).

9. Module d'alimentation en énergie selon l'une des revendications précédentes,
**caractérisé en ce que**
le module d'alimentation en énergie (1) est conçu pour le fonctionnement d'une tension d'entrée (U_{IN}) au niveau de son port d'entrée (2),
la source d'énergie auxiliaire (10) est conçue pour la charge avec une tension de charge qui est différente de la tension d'entrée (U_{IN}), et
le module d'alimentation en énergie (1) présente un dispositif d'adaptation de la tension de charge (30) afin d'adapter la tension d'entrée (U_{IN}) à la tension de charge.

10. Module d'alimentation en énergie selon l'une des revendications précédentes,
**caractérisé en ce que**
le module d'alimentation en énergie (1) comprend un condensateur qui est entre le dispositif de séparation (6) et le port de sortie (3), relié en parallèle à ceux-ci.

11. Utilisation d'un dispositif de séparation (6) électrique doté de deux transistors (15) et de deux diodes (16), où les transistors (15) sont branchés en série inversement, et, pour chaque transistor (15), est branchée une des diodes (16) inversement par rapport à son sens du courant, dans un module d'alimentation en énergie (1) selon l'une des revendications précédentes entre un port d'entrée (2) pour le raccordement à une source de courant (4), et un port de sortie (3) servant d'alimentation en courant sans interruption, où une source d'énergie auxiliaire (10) est positionnée en parallèle par rapport au port d'entrée (2) et au port de sortie (3) entre le dispositif de séparation (6) et le port de sortie (3).

12. Procédé de fonctionnement d'un module d'alimentation en énergie (1) selon l'une des revendications 1 à 10,
**caractérisé en ce que**
le dispositif de séparation (6) est mis en marche de telle manière que le transistor (15) dans le sens du courant est commuté en position conductrice du port d'entrée (2) vers le port de sortie (3) lorsque la tension d'entrée (U_{IN}) au niveau du port d'entrée (2) est supérieure de l'équivalent d'une valeur limite à la tension de sortie (U_{OUT}) au niveau du port de sortie (2), et inversement.

13. Procédé selon la revendication 12,
**caractérisé en ce que**
le dispositif de séparation (6) est mis en marche de telle manière que le transistor (15) dans le sens du courant est commuté en position de blocage du port de sortie (3) vers le port d'entrée (2) lorsque la tension de sortie (U_{OUT}) s'annule.

14. Procédé selon la revendication 13,
**caractérisé en ce**
**qu'**après le blocage du transistor (15) dans le sens du courant du port de sortie (3) vers le port d'entrée (2), le dispositif de séparation (6) est mis en marche de telle manière que le transistor (15) dans le sens du courant est commuté en position conductrice du port de sortie (3) vers le port d'entrée (2) avec une fréquence prédéfinie.
